# EUROPEAN PATENT APPLICATION

(11) **EP 2 387 138 A1**
(43) Date of publication of application: **16.11.2011**
(21) Application number: 10162482.3
(22) Date of filing: 11.05.2010
(51) Int. Cl.: H02M 3/335

(54) **A power converter**

(71) Applicant: NXP B.V., 5656 AG Eindhoven (NL)
(72) Inventor: Smeets, Patrick Emanuel Gerardus, 5656 AE Eindhoven (NL); Shrestha, Rameswor, 5656 AE Eindhoven (NL); Nowak, Katarzyna, 5656 AE Eindhoven (NL); Pansier, Frans, 5656 AE Eindhoven (NL); Halberstadt, Hans, 5656 AE Eindhoven (NL); Hoogzaad, Gian, 5656 AE Eindhoven (NL)
(74) Representative: Schouten, Marcus Maria

(57) **Abstract**

The invention refers to a power converter and to a method for power conversion. The power converter comprises a primary winding (nₚ) adapted to receive a primary alternating voltage. The converter further comprises a first secondary circuit (nₛ₁, D1a, D1b) magnetically coupled to the primary winding (nₚ), the first secondary circuit generating a first secondary output signal (I_{D1}), the power converter further includes a second secondary circuit (nₛ₂, D2a, D2b) magnetically coupled to the primary winding (nₚ). The power converter includes a post regulator (20) adapted to be coupled to the second secondary circuit (nₛ₂, D2a, D2b), the post regulator (20) comprising a switch (S3) which is opened at every zero-crossing of the first output signal (I_{D1}).

## Description

### FIELD OF THE INVENTION

The invention relates to a power converter and to a method adapted to power conversion.

### BACKGROUND OF THE INVENTION

Power converters are very much used in many applications for supplying a DC current or voltage to a consumer. There are applications in which multiple outputs are necessary for delivery of different voltages/currents in the same application.

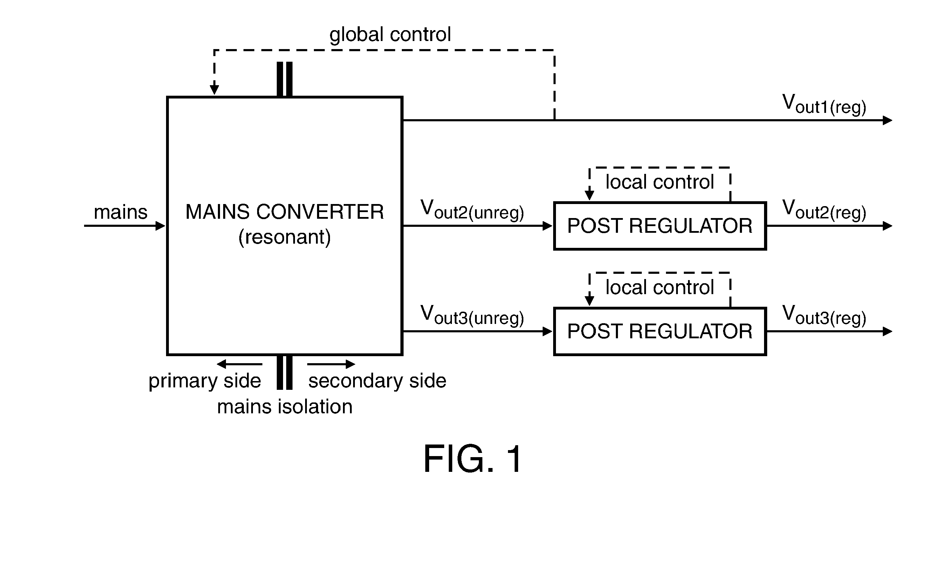

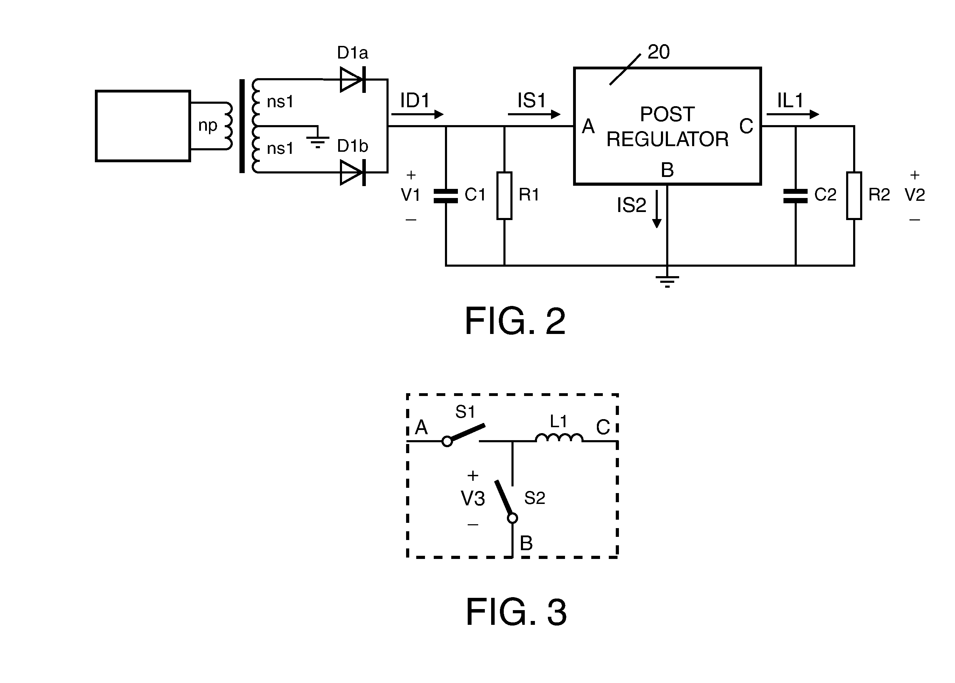

An example of state of the art power converter is shown in Fig. 1. State-of-the converters apply so-called post-regulation to generate auxiliary output voltages from one or more unregulated levels generated by the power converter. As an example, a resonant power converter is shown in Fig. 1. The rectified mains (50 - 60 Hz) or a DC voltage is supplied to the mains of the resonant converter. A global control loop ensures tight regulation of the main output V_{out1(reg)}. Additional unregulated voltages V_{outx(unreg)} can easily be generated by additional windings or taps on an isolation transformer included in mains converter. The unregulated voltages however in many cases are too course or vary too much for final application. Post regulators with local control are applied to generate well controlled levels V_{outx(reg)}. Generally they are switched mode power converters (buck, boost, buck-boost) comprising bulky passive components (L₁, Cₒ₂) and expensive, low efficient power semiconductors (S₁, S₂), as it is shown in the examples of Fig. 2 and Fig. 3.

### SUMMARY OF THE INVENTION

Hence, it is a need to provide a power converter that can be more easily integrated and being able to generate with minimum modifications more output signals.

It is therefore an object of the invention to provide a power converter comprising
- a primary winding adapted to receive a primary alternating voltage;
- a first secondary circuit magnetically coupled to the primary winding, the first secondary circuit generating a first secondary output signal;
- a second secondary circuit magnetically coupled to the primary winding;
- a post regulator adapted to be coupled to the second secondary circuit; the post regulator comprising a switch which controls the power flow and is synchronized with every zero-crossing of the first output signal.

The invention is defined by the independent claims. Dependent claims define advantageous embodiments.

The above-mentioned converter is easy to adapt for generating multiple output signals and it is easily scalable i.e. it is possible to adapt it to generate more output signals simply by multiplication of the secondary circuits together with the post regulation circuits.

In an embodiment of the invention, the second secondary circuit is adapted to generate a second output signal, the switch being opened at a zero-crossing of the second output signal.

In an embodiment, the switch is coupled to second secondary signal an inductor. This improves the smoothing of the output signal. The inductor can be a discrete component or can be (partly) integrated in the power converter transformer. And even more, the inductor increases the conduction angle of the output diode and as such reduces the crest factor of the output current.

In another embodiment, the first secondary circuit comprises a first secondary winding magnetically coupled to the primary winding; the second secondary circuit comprises a second secondary winding magnetically coupled to the primary winding; the primary winding, the first secondary winding and the second secondary winding are included into a resonant power converter. The resonant power converter may be adapted to be coupled to rectified mains. The rectified mains could be further obtained from the 50 - 60 Hz mains. Alternatively, the supply voltage can be a separate DC source, as a battery.

In another embodiment, a method for power conversion is derived, the method comprising steps of:
- supplying a primary alternating voltage to a primary winding;
- generating a first secondary output signal by a first secondary circuit magnetically coupled to the primary winding;
the first secondary output signal being used to open a switch included into a post regulator, the post regulator being adapted to be coupled to a second secondary circuit.

### BRIEF DESCRIPTION OF THE DRAWINGS

The above and other advantages will be apparent from the exemplary description of the accompanying drawings in which
Fig. 1 depicts a prior art power converter with multiple outputs;
Fig. 2 depicts a more detailed view of a prior art power converter with multiple outputs;
Fig. 3 depicts a prior art post regulator;
Fig. 4 depicts a power regulator according to the invention;
Fig. 5 depicts the waveforms of the power regulator according to the invention.

### DETAILED DESCRIPTION OF EMBODIMENTS

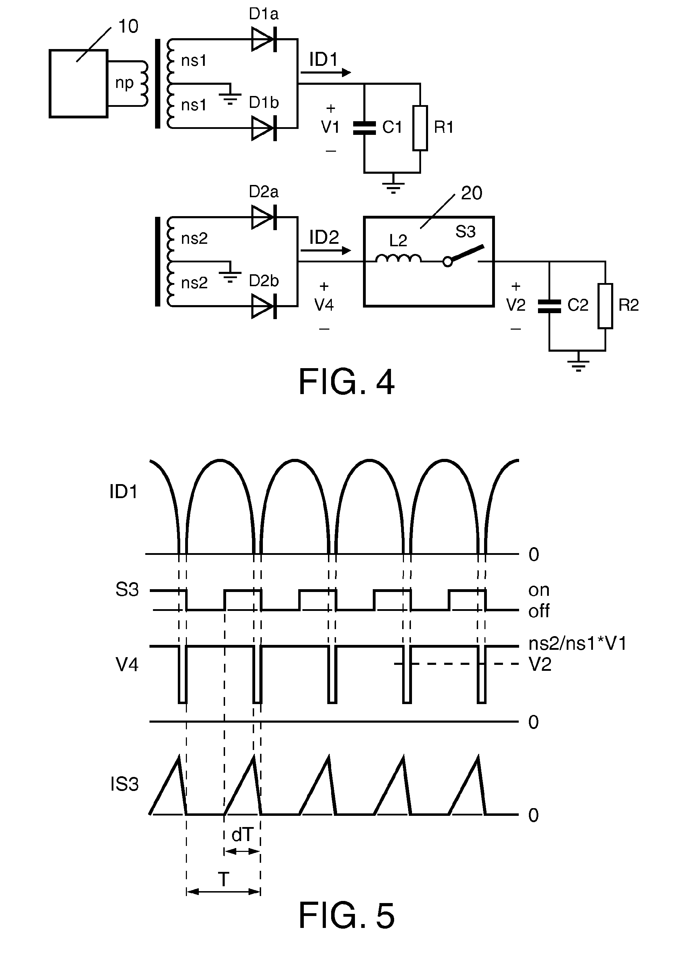

Fig. 4 depicts a power regulator according to the invention.

The power converter comprises a primary winding nₚ, which is connected either to a conventional pulsating voltage or it is part of a series resonant circuit 10. The pulsating voltage can be the mains (50-60 Hz). Alternatively, the resonant converter can be supplied from a Direct Current (DC) source.

The power converter further comprises a first secondary winding nₛ₁ and a second secondary winding nₛ₂. The first secondary winding nₛ₁ provides a first output signal ID1, which is used as a first output of the converter and as a reference signal for a second regulator as it is described hereunder. The resistor R1 and the capacitor C1 represent the load of the first output signal. The first and the second secondary windings each comprise two identical windings.

The power converter is adapted to have a second secondary winding nₛ₂, too. The secondary winding provides a second output signal ID2. It is worthwhile to mention that the power converter may comprise more than two secondary windings and therefore it may produce more than two output signals in a similar manner as the power converter described in this application does. The first and the secondary windings may, each, comprise two identical windings.

The second output signal is connected to a small inductor L2 and to a switch S3 and it is delivered to a second load comprising the resistor R2 and the capacitor C2.

The power conversion function can be better understood in connection with Fig. 5 depicting the waveforms of the power converter according to the invention.

Part of the current coming from the transformer is diverted to the second winding nₛ₂.. This current starts to flow when the switch S3 starts to conduct and stops by natural commutation. Switch S3 should be opened before the current from the transformer changes polarity. This is done by detecting the voltage over the first secondary winding ns 1 or over the secondary winding nₛ₂ or the current through S3. This control methodology ensures Zero Current Switching, which enhances the power efficiency i.e. reduced switching losses and avoids voltage spikes over switch S3. The volt*second product over L2 is much smaller now since a tapped voltage is used. The turning off of S3 is synchronized with the resonant converter output winding and dT is the control parameter: larger dT, more power.

It is remarked that the scope of protection of the invention is not restricted to the embodiments described herein. Neither is the scope of protection of the invention restricted by the reference numerals in the claims. The word "comprising" does not exclude other parts than those mentioned in the claims. The word "a(n)" preceding an element does not exclude a plurality of those elements. Means forming part of the invention may both be implemented in the form of dedicated hardware or in the form of a programmed purpose processor. The invention resides in each new feature or combination of features.

## Claims

1. A power converter comprising
- a primary winding (nₚ) adapted to receive a primary alternating voltage;
- a first secondary circuit (nₛ₁, D1a, D1b) magnetically coupled to the primary winding (nₚ), the first secondary circuit generating a first secondary output signal (I_{D1});
- a second secondary circuit (nₛ₂, D2a, D2b) magnetically coupled to the primary winding (nₚ) and generating a second secondary signal (I_{D2});
- a post regulator (20) adapted to be coupled to the second secondary circuit (nₛ₂, D2a, D2b); the post regulator (20) comprising a switch (S3) which is opened at zero-crossing of the first output signal (I_{D1}).

2. A power converter as claimed in claim 1, wherein the second secondary circuit (nₛ₂, D2a, D2b) is adapted to generate a second output signal (ID2), the switch (S3) being opened at a zero-crossing of the second output signal (I_{D2}).

3. A power converter as claimed in the previous claims, wherein the second output signal is either a current (I_{D1}, I_{D2}) or a voltage on a first secondary winding (n_{S1}) or a voltage on a second secondary winding (nₛ₂).

4. A power converter as claimed in previous claims, wherein the switch (S3) is coupled to the second secondary signal (I_{D2}) via an inductor (L2).

5. A power converter as claimed in the previous claims, wherein the inductor is integrated with the transformer of the power converter.

6. A power converter as claimed in any previous claims, wherein
- the first secondary circuit comprises a first secondary winding (nₛ₁) magnetically coupled to the primary winding (nₚ);
- the second secondary circuit comprises a second secondary winding (nₛ₂) magnetically coupled to the primary winding (nₚ);
the primary winding (nₚ), the first secondary winding (nₛ₁) and the second secondary winding (nₛ₂) are included into a resonant power converter.

7. A power converter as claimed in claim 6, wherein the resonant power converter is adapted to be coupled to a rectified mains.

8. A method for power conversion comprising steps of:
- supplying a primary alternating voltage to a primary winding;
- generating a first secondary output signal (I_{D1}) by a first secondary circuit (nₛ₁, D1a, D1b) magnetically coupled to the primary winding (nₚ);
- the first secondary output signal or a second output signal being used to open a switch included into a post regulator (20),
- the post regulator (20) being adapted to be coupled to a second secondary circuit (nₛ₂, D2a, D2b).
